(19) Europäisches Patentamt
European Patent Office
Office européen des brevets

(11) Publication number : **0 622 416 A2**

# (12) EUROPEAN PATENT APPLICATION

(21) Application number : **94303122.9**

(22) Date of filing : **28.04.94**

(51) Int. Cl.$^5$ : **C08L 67/02,** C08L 79/08, // (C08L67/02, 33:14), (C08L79/08, 33:14)

(30) Priority : **28.04.93 US 54737**

(43) Date of publication of application : **02.11.94 Bulletin 94/44**

(84) Designated Contracting States : **DE ES FR GB IT NL**

(71) Applicant : **GENERAL ELECTRIC COMPANY**
**1 River Road**
**Schenectady, NY 12345 (US)**

(72) Inventor : **Gallucci, Robert Russell**
**1109 Tanglewood Drive**
**Mount Vernon, Indiana 47620 (US)**
Inventor : **Angeli, Stephen Richard**
**5496 Northwood Drive**
**Hickory, North CArolina 28601 (US)**

(74) Representative : **Pratt, Richard Wilson**
**London Patent Operation**
**G.E. Technical Services Co. Inc.**
**Essex House**
**12/13 Essex Street**
**London WC2R 3AA (GB)**

## (54) Low-gloss thermoplastic compositions comprising polyester, Copolyether polyester or blends thereof.

(57) A low gloss thermoplastic composition with good physical properties comprises a polyester, a polyether polyester or blends thereof. The thermoplastic composition is blended with a gloss reducing amount of a glycidyl (meth)acrylate copolymer to effect the desired low gloss properties. The thermoplastic composition may also include rubber modified vinyl polymers, as well as additional thermoplastic polymers such as polycarbonates.

EP 0 622 416 A2

## BACKGROUND OF THE INVENTION

### Field of the Invention

This invention relates to low-gloss thermoplastic compositions comprising polyester resin, copolyether polyester resin, or resin blends thereof. More particularly, this invention provides low gloss polyester, copolyether polyester, or blends thereof, comprising certain glycidyl methacrylate polymers in amounts effective for gloss reduction.

### Brief Description of the Prior Art

Molded products are often made from thermoplastic polymers (resins) which frequently exhibit glossy surfaces. For some purposes, a glossy surface is desirable. However, a matte or non-glossy surface is often preferable for products such as housings for computer terminals, typewriters, miscellaneous electrical appliances and certain automotive parts.

Surface embossing is one method which has been practiced to reduce or eliminate the surface gloss which is exhibited by polymer compositions. Surface embossing, however, requires a separate manufacturing step and adds cost to the final product. Moreover, subsequent abrasion may remove the embossed surface, thereby causing the gloss to reappear.

The addition of delustering agents such as finely-divided silica, silicate, alumina, or other mineral filler also has been employed to reduce surface gloss. Such agents, however, can have a serious detrimental effect on the physical properties of the molded article, e.g., impact strength. Polymeric delustering agents also frequently have deleterious effects on physical properties. The polymeric agents not only can detrimentally affect impact strength, but also can detrimentally affect heat distortion temperature, weathering, and light stability.

U.S. Pat. No. 4,460,742 describes delustering additives with a core-shell rubber structure based on alkyl acrylate-styrene copolymers which are partially cross-linked.

Low gloss materials have previously been prepared from blends of polycarbonates or copolyester carbonates with an acrylonitrile-styrene-acrylate interpolymer and a gloss-reducing amount of glycidyl methacrylate polymer. See U.S. Pat. No. 4,885,335. These polycarbonate blends, however, do not have the solvent resistance and higher melting points of polyesters or copolyether polyesters and thus are not appropriate for many commercial applications. Moreover, as illustrated later below, blends of certain polycarbonates and glycidyl methacrylate copolymers still exhibit high gloss surfaces which would be unsuitable for certain applications discussed above.

Low gloss thermoplastic blends also have been prepared from a blend of acrylonitrile-styrene-acrylate interpolymers and a gloss-reducing amount of glycidyl methacrylate copolymer. See U.S. Pat. No. 4,894,416.

There has remained a need for low gloss resins.

## SUMMARY OF THE INVENTION

The low gloss composition of the invention comprises:

(a) at least one thermoplastic polyester resin, copolyether polyester resin or resin blends thereof,

(b) an effective gloss reducing amount of glycidyl (meth)acrylate polymer, preferably a copolymer of glycidyl (meth)acrylate with at least one comonomer selected from the group consisting of styrene, acrylonitrile, and alkyl (meth)acrylate where the alkyl is other than glycidyl.

The low gloss compositions of this invention may include additional polymers, depending on the properties desired for the composition. These additional polymers, for example, include impact modifiers, such as rubber modified vinyl polymers, e.g., polymethyl(meth)acrylate-butadiene rubber. Thermoplastic polycarbonates also may be added.

It has been found that compositions according to this invention provide substantial reduction in gloss while retaining the advantageous physical properties of the base resin or resins.

The term "blends thereof" in the context of a polyester or copolyether polyester blend includes blends of (i) two different polyesters, (ii) two different copolyether polyesters or (iii) blends of polyester and copolyether polyester.

The term "(meth)acrylate" as used herein designates both acrylate and methacrylate, i.e., the term is equivalent to specifying an ester chosen from the group consisting of acrylate and methacrylate, and is employed for brevity.

## DETAILED DESCRIPTION OF THE INVENTION

As mentioned above, the present invention is directed to blends of a glycidyl methacrylate gloss-reducing polymer additive with a base resin. The base resin may be based entirely on a thermoplastic polyester or copolyether polyester resin. The base resin also may be a blend of the two resins, or a blend of either polyester or copolyether polyester with another thermoplastic resin such as polycarbonate. The base resins embraced by this invention include those resins which are predominantly crystalline in nature as opposed to amorphous. For example, the substantially amorphous copolyester polycarbonates disclosed in U.S. Patent 4,885,335 would not be suitable as the base resin for this invention. Thus the monomers and methods are chosen to insure that the base resin or resins of the invention are predominantly crystalline, and display a distinct melting point.

Polyesters of the present invention can be derived from an aliphatic or cycloaliphatic diol, or mixtures thereof, containing from 2 to about 10 carbon atoms and at least one aromatic dicarboxylic acid. Polyester may comprise about 10 to about 99% by weight of the total composition.

Preferred polyesters are derived from an aliphatic diol and an aromatic dicarboxylic acid and have repeated units of the following general formula:

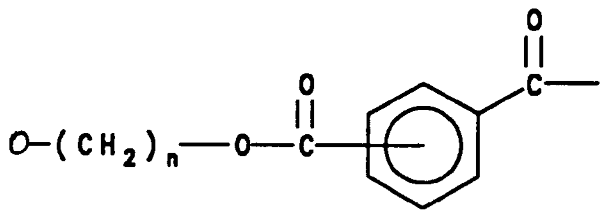

wherein n is an integer of from 2 to 6. The most preferred polyesters are poly(ethylene terephthalate) and poly(1,4-butylene terephthalate), i.e., ("PBT").

Also contemplated herein are the above polyesters with minor amounts e.g., from 0.5 to about 5 percent by weight, of units derived from aliphatic acid and/or aliphatic polyols to form copolyesters. The aliphatic polyols include glycols, such as poly(ethylene glycol). All such polyesters can be made following the teachings of, for example, U.S. Pat. No. 2,465,319 and 3,047,539.

The polyesters which are derived from a cycloaliphatic diol and an aromatic dicarboxylic acid are prepared, for example, by condensing either the cis-or trans-isomer (or mixtures thereof) of, for example, 1,4-cyclohexanedimethanol with an aromatic dicarboxylic acid so as to produce a polyester having recurring units of the following formula:

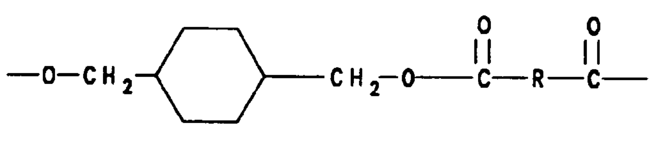

wherein the cyclohexane ring is selected from the cis-and transisomers thereof and R represents an aryl radical containing 6 to 20 carbon atoms and which is the decarboxylated residue derived from an aromatic dicarboxylic acid.

Examples of aromatic dicarboxylic acids represented by the decarboxylated residue R are isophthalic or terephthalic acid, 1,2-di(p-carboxyphenyl)ethane, 4,4'-dicarboxydiphenyl ether, etc., and mixtures of these. All of these acids contain at least one aromatic nucleus. Acids containing fused rings can also be present, such as in 1,4- or 1,5-naphthalenedicarboxylic acids. The preferred dicarboxylic acids are terephthalic acid or a mixture of terephthalic and isophthalic acids.

Another preferred polyester is a copolyester derived from a cyclohexane dimethanol, an alkylene glycol and an aromatic dicarboxylic acid. These copolyesters are prepared by condensing either the cis-or trans-isomer (or mixtures thereof) of, for example, 1,4-cyclohexanedimethanol and an alkylene glycol with an aromatic dicarboxylic acid so as to produce a copolyester having units of the formula:

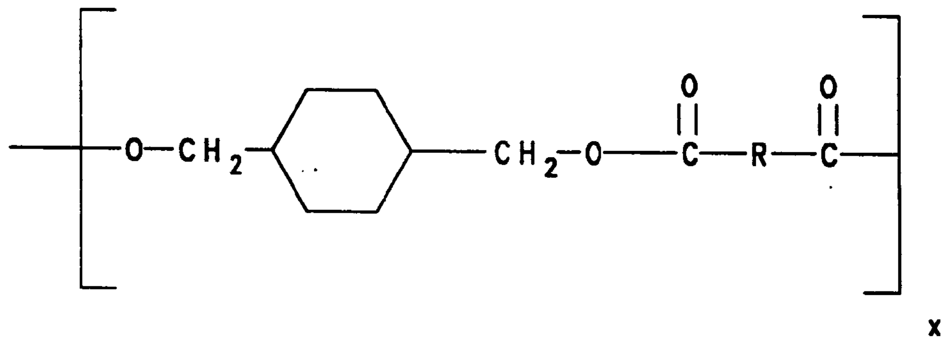

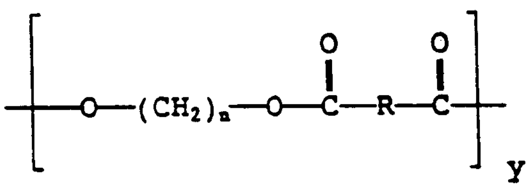

wherein the cyclohexane ring is selected from the cis-and trans isomers thereof, R is as previously defined, n is an integer of 2 to 6, the x units comprise from about 10 to about 90 percent by weight and the y units comprise from about 90 to about 10 percent by weight.

The polyesters described herein are either commercially available or can be produced by methods well known in the art, such as those set forth in, for example, U.S. Pat. No. 2,901,466.

The polyesters used herein have an intrinsic viscosity of from about 0.4 to about 2.0 dl/g as measured in a 60:40 phenol/tetrachloroethane mixture or similar solvent at 23°-30°C.

The base resin component may also be a thermoplastic copolyether polyester polymer. The terms 'copolyether polyester' and "copolyether ester" are used interchangeably below, unless indicated otherwise. Thermoplastic copolyether polyesters suitable for use in this invention include both random and block copolymers. In general, these polymers are prepared by conventional esterification/polycondensation processes from (i) one or more diols, (ii) one or more dicarboxylic acids, (iii) one or more long chain ether glycols, and optionally, (iv) one or more caprolactones or polycaprolactones. Suitable copolyether polyesters which can be employed in this invention are well known and are available from several sources, including the Hytrel® resins from E.I. du Pont de Nemours & Co. and the LOMOD® resins from General Electric Company and are described in U.S. Pat. Nos. 3,023,192; 3,651,014; 3,763,109; 3,766,146; 3,784,520; 3,801,547; 3,907,926; 4,156,774; 4,184,997; 4,264,761 and 4,355,155, all incorporated herein by reference.

Diols (i) which can be used in the preparation of the copolyether polyesters include both saturated and unsaturated aliphatic and cycloaliphatic dihydroxy compounds. These diols are preferably of a low molecular weight, i.e., having a molecular weight of about 300 or less. When used herein, the term "diols" and "low molecular weight diols" should be construed to include equivalent ester forming derivatives thereof, provided, however, that the molecular weight requirement pertains to the diol only and not to its derivatives. Exemplary of ester forming derivatives there may be given the acetates of the diols as well as, for example, ethylene oxide or ethylene carbonate for ethylene glycol.

Preferred saturated and unsaturated aliphatic and cycloaliphatic diols are those having from about 2 to about 19 carbon atoms. Exemplary of these diols there may be given ethylene glycol; propanediol; butanediol; butenediol; pentanediol; 2-methyl propanediol; 2,2-dimethyl propanediol; hexanediol; decanediol; 2-octyl undecanediol; 1,2-, 1,3- and 1,4-dihydroxy cyclohexane; 1,2-, 1,3- and 1,4-cyclohexane dimethanol; etc. Especially preferred are 1,4-butanediol and mixtures thereof with hexanediol or butenediol.

Especially preferred diols are the saturated aliphatic diols, mixtures thereof and mixtures of a saturated diol(s) with an unsaturated diol(s), wherein each diol contains from 2 to about 8 carbon atoms. Where more than one diol is employed, it is preferable that at least about 60 mole %, most preferably at least 80 mole %, based on the total diol content, be the same diol. As mentioned above, the preferred thermoplastic elastomers are those in which 1,4-butanediol is present in a predominant amount.

Dicarboxylic acids (ii) which are suitable for use in the preparation of the copolyesters include aliphatic, cycloaliphatic, and/or aromatic dicarboxylic acids. These acids are preferably of a low molecular weight, i.e., having a molecular weight of less than about 350; however, higher molecular weight dicarboxylic acids, especially dimer acids, may also be used. The term "dicarboxylic acids" as used herein, includes equivalents of dicarboxylic acids having two functional carboxyl groups which perform substantially like dicarboxylic acids in reaction with glycols and diols in forming polyester polymers. These equivalents include ester and ester-forming derivatives, such as acid halides and anhydrides. Additionally, the dicarboxylic acids may contain any substituent group(s) or combinations which do not substantially interfere with the polymer formation and use of the polymer in the practice of this invention.

Aliphatic dicarboxylic acids, as the term is used herein, refers to carboxylic acids having two carboxyl groups each of which is attached to a saturated carbon atom. If the carbon atom to which the carboxyl group is attached is saturated and is in a ring, the acid is cycloaliphatic.

Aromatic dicarboxylic acids, as the term is used herein, refers to dicarboxylic acids having two carboxyl groups each of which is attached to a carbon atom in an isolated or fused benzene ring system. It is not necessary that both functional carboxyl groups be attached to the same aromatic ring and where more than one ring is present, they can be joined by aliphatic or aromatic divalent radicals or divalent radicals such as -O- or $-SO_2-$.

Representative aliphatic and cycloaliphatic acids which can be used are sebacic acid; 1,2-cyclohexane dicarboxylic acid; 1,3-cyclohexane dicarboxylic acid; 1,4-cyclohexane dicarboxylic acid; adipic acid; glutaric acid; succinic acid; oxalic acid; azelaic acid; dimer acid; 4-cyclohexene-1,2-dicarboxylic acid; 2-ethylsuberic acid; tetramethylsuccinic acid; cyclopentane dicarboxylic acid; decahydro-1,5-naphthalene dicarboxylic acid; 4,4'-bicyclohexyl dicarboxylic acid; decahydro-2,6-naphthalene dicarboxylic acid; 4,4 methylenebis(cyclohexane carboxylic acid); 3,4-furan dicarboxylic acid; and 1,1-cyclobutane dicarboxylic acid. A preferred aliphatic acid is cyclohexane dicarboxylic acid.

Representative aromatic dicarboxylic acids which can be used include terephthalic; phthalic and isophthalic acids; bi-benzoic acid; substituted dicarboxy compounds with two benzene nuclei such as bis(p-carboxyphenyl) methane; oxybis(benzoic acid); ethylene-1,2-bis(benzoic acid); 1,5-naphthalene dicarboxylic acid; 2,6-naphthalene dicarboxylic acid; 2,7-naphthalene dicarboxylic acid; phenanthrene dicarboxylic acid; anthracene dicarboxylic acid; 4,4'-sulfonyl dibenzoic acid, and halo and $C_1$-$C_{12}$ alkyl; alkoxy; and aryl ring substitution derivatives thereof. Hydroxy acids such as p-(p-hydroxyethoxy)benzoic acid can also be used provided an aromatic dicarboxylic acid is also present.

Preferred dicarboxylic acids for the preparation of the copolyetheresters are the aromatic dicarboxylic acids, mixtures thereof and mixtures of one or more dicarboxylic acid with an aliphatic and/or cycloaliphatic dicarboxylic acid, most preferably the aromatic dicarboxylic acids. Among the aromatic acids, those with 8-16 carbon atoms are preferred, particularly the benzene dicarboxylic acids, i.e., phthalic, terephthalic and isophthalic acids and their dimethyl ester derivatives. Especially preferred is dimethyl terephthalate.

Finally, where mixtures of dicarboxylic acids are employed, it is preferred that at least about 60 mole %, preferably at least about 80 mole %, based on 100 mole % of dicarboxylic acid (b) be of the same dicarboxylic acid or ester derivative thereof. As mentioned above, the preferred copolyetheresters are those in which terephthalic acid is the predominant dicarboxylic acid.

Preferred polyester segments will show a crystalline behavior with a distinct melting point.

Suitable long chain ether glycols (iii) which can be used in the preparation of the thermoplastic polyether ester elastomers are preferably poly(oxyalkylene)glycols and copoly(oxyalkylene)glycols of molecular weight of from about 400 to 12000. Preferred poly(oxyalkylene) units are derived from long chain ether glycols of from about 900 to about 4000 molecular weight and having a carbon-to-oxygen ratio of from about 1.8 to about 4.3, exclusive of any side chains.

Representative of suitable poly(oxyalkylene)-glycols are poly(ethylene ether)glycol; poly(propylene ether)-glycol; poly(tetramethlyene ether)glycol; random or block copolymers of ethylene oxide and propylene oxide, including ethylene oxide end capped poly(propylene ether)glycol and predominately poly(ethylene ether)backbone, copoly(propylene ether-ethylene ether)glycol; and random or block copolymers or tetrahydrofuran with minor amounts of a second monomer such as ethylene oxide, propylene oxide, or methyltetrahydrofuran (used in proportions such that the carbon-to-oxygen ratio does not exceed about 4.3). Polyformal glycols prepared by reacting formaldehyde with diols such as 1,4-butanediol and 1,5-pentanediol are also useful. Especially preferred poly(oxyalkylene)glycols are poly(propylene ether)-glycol, poly(tetramethylene ether)glycol and poly(ethylene ether)glycol.

Optionally, these copolyetheresters may have been incorporated therein one or more caprolactones or polycaprolactones.

Caprolactones (iv) suitable for use herein are widely available commercially, e.g., from Union Carbide Corporation and Aldrich Chemicals. While epsilon caprolactone is especially preferred, it is also possible to use substituted caprolactones wherein the epsilon caprolactone is substituted by a lower alkyl group such as a methyl or ethyl group at the alpha, beta, gamma, delta or epsilon positions. Additionally, it is possible to use polycaprolactone, including homopolymers and copolymers thereof with one or more components, as well as

hydroxy terminated polycaprolactone, as block units in the novel copolyetheresters of the present invention. Suitable polycaprolactones and processes for their production are described in, for example, U.S. Pat. Nos. 3,761,511; 3,767,627; and 3,806,495 herein incorporated by reference.

In general, suitable copolyetherester elastomers are those in which the weight percent of (iii) long chain ether glycol component or the combined weight percent (iii) long chain ether glycol component and (iv) caprolactone component in the copolyetheresters is from about 5 to about 70 weight percent. Preferred compositions are those wherein the weight percent of (iii), or (iii) and (iv), is from about 10 to about 50 weight percent. Where both (iii) long chain ether glycol and (iv) caprolactone are present, each will comprise from about 2 to about 50 percent by weight, preferably from about 5 to about 30 percent by weight, of the copolyetheresters.

The above described copolyether polyesters may be prepared by conventional esterification/condensation reactions for the production of polyesters. Exemplary of the processes that may be practiced are as set forth in, for example, U.S. Pat. Nos. 3,023,192; 3,763,109; 3,651,014, 3,663,653 and 3,801,547, herein incorporated by reference. Additionally, these compositions may be prepared by such processes and other known processes to effect random copolymers, block copolymers or hybrids thereof wherein both random and block units are present. For example, it is possible that any two or more of the foregoing monomers/reactants may be prereacted prior to polymerization of the final copolyetheresters. Alternatively, a two-part synthesis may be employed wherein two different diols and/or dicarboxylic acids are each prereacted in separated reactors to form two low molecular weight prepolymers which are then combined with the long chain ether glycol to form the final tri-block copolyether esters.

A preferred copolyether ester is a copolyether-polyester block copolymer. The preferred copolyetherester resin consists essentially of long-chain ester units having the formula:

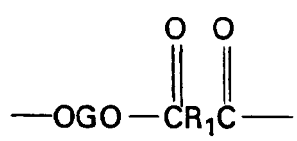

wherein G is the divalent radical remaining after removal of the terminal hydroxyl groups from a poly(alkylene oxide) glycol having a number-average molecular weight of about 400 to about 6000; and $R_1$ is the divalent radical remaining after removal of the carboxyl groups from a dicarboxylic acid; and short-chain ester units having the formula:

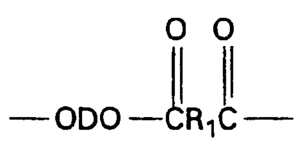

wherein D is the divalent radical remaining after removal of the hydroxyl groups from a low molecular weight diol having a molecular weight of less than about 250; and $R_1$ is as defined above; with the proviso that the short-chain ester units constitute about 40% to about 90% by weight of the polyether-ester, and the long-chain ester units constitute about 10% to about 60% by weight of the copolyether-ester.

Another class of copolyether polyesters suitable for this invention are polyetherimide ester resins. Thermoplastic polyetherimide ester elastomers comprising the reaction products of (a) a diol, (b) a dicarboxylic acid, (c) a high molecular weight poly(oxalkylene)diamine, and (d) a tricarboxylic acid or its derivatives are known and described in U.S. Pat. Nos. 4,544,734 and 4,556,705 to McCready and in U.S. Pat. No. 4,556,688 to McCready et al. These polyetherimide esters exhibit excellent stress-strain properties, low tensile set, high melting temperatures, and/or excellent strength/toughness characteristics as well as superior flexibility which are especially suitable for molding and extrusion applications.

Polyetherimide ester resins are also set out in U.S. Pat. Nos. 4,552,950 and 4,732,947; which are incorporated herein by reference.

Thermoplastic polyetherimide esters are known and described in U.S. Pat. No. 4,371,692, which is incorporated herein by reference. These polymers are the reaction product of a diol, a polyoxyalkylene glycol and a diimide diacid which is the reaction product of an aromatic diamine and trimellitic anhydride.

The base resin of this composition may also comprise a blend of polyester and copolyether polyester resins. For example, if a low modulus composition is desired, 50% or more by weight of the total base resin can comprise copolyether polyester. On the other hand, if a high molecular weight composition is desired, 50% or

more by weight of the total base resin can comprise polyester. These blends can be formed by conventional blending techniques.

As discussed above, the composition of this invention may contain a blend of the base resin with additional thermoplastic polymers. It is, for instance, desirable in certain instances to include a rubber-modified vinyl polymer with a base polyester resin. The rubber-modified polymers are impact-modifiers and if employed are added in amounts which depend on the impact strength properties desired. These polymers can comprise 1-20% by weight of the total composition. Polyester compositions comprising 5-15% rubber-modified vinyl polymers are preferable.

Suitable rubber-modified vinyl polymers include homopolymers and/or copolymers. The rubber-modified vinyl copolymer can be derived, for example, from a vinyl aromatic monomer of the structural formula

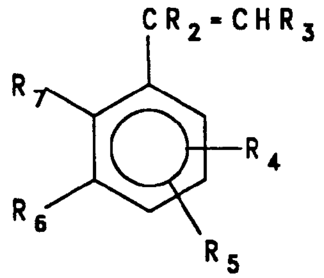

where $R_2$ and $R_3$ are selected from the group consisting of hydrogen and lower alkyl or lower alkenyl groups of from 1 to 6 carbon atoms; $R_4$ and $R_5$ are selected from the group consisting of hydrogen and lower alkyl and alkenyl groups of 1 to 6 carbon atoms or $R_6$ and $R_7$ may form an unsaturated hydrocarbyl ring structure.

The rubber-modified vinyl polymers can be derived from 0 to about 20% of the vinyl aromatic monomers illustrated above. Vinyl aromatic monomers of the above formula include styrene, α-methylstyrene, t-butylstyrene, vinyl toluene, vinyl xylene, ethyl vinyl benzene, chlorostyrene, ethyl vinyl toluene, isopropenyl toluene and diethyl vinyl benzene. A preferred vinyl aromatic monomer is styrene.

Other monomers which are homopolymerized, or can be copolymerized with the above vinyl monomers, include those of the general formula:

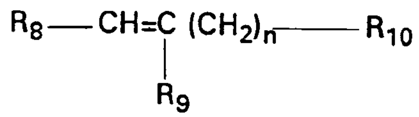

wherein $R_8$ and $R_9$ are selected from the group consisting of hydrogen, alkyl groups of 1 to 4 carbon atoms, carboalkoxy or $R_{10}$ and $R_{11}$ taken together represent an anhydride linkage (-COOOC-) and $R_{10}$ is selected from hydrogen, vinyl, alkyl or alkenyl groups having from 1 to 12 carbon atoms, cycloalkyl, carboalkoxy, alkoxyalkyl carboxy, ketoxy, carboxy, or cyano and n is 0 or an integer from 1 to 9. Copolymerizable monomers of the above formula include acrylonitrile, methacrylonitrile, acrylic acid, methacrylic acid, maleic anhydride, methyl methacrylate, ethyl acrylate, acrylamide, butadiene, isoprene and the like.

The above vinyl homopolymers or copolymers are modified by the incorporation of a rubber or elastomeric material. Such an incorporation can be accomplished by blending or graft or block copolymerization with the homopolymer or copolymer derived from the vinyl monomer. Suitable rubbers include polymers of aliphatic conjugated dienes such as 1,3-butadiene, isoprene, methylisoprene as well as ethylene propylene copolymers and EPDM rubber.

Preferred rubber modified vinyl polymers for the purposes of the present invention include the various grades of methylmethacrylate-butadiene-styrene (MBS), styrene-ethylenebutylene-styrene (SEBS), acrylonitrile-butadiene-styrene (ABS). High graft rubber ABS modifiers, i.e., those modifiers comprising 50% by weight or greater butadiene monomer, are sometimes preferable.

The additional polymer also may be a carbonate polymer. Suitable carbonates include both polycarbonates and copolyestercarbonates, and may be employed in an amount ranging from about 5 to about 60% by weight of the total composition.

The polycarbonate resins and a method of their preparation by interfacial polymerization are well known; see, for example, the details provided in the U.S. Pat. Nos. 3,028,365; 3,334,154; 3,275,601; 3,915,926; 3,030,331; and 4,188,314, all of which are incorporated herein by reference thereto.

In general, the method of interfacial polymerization comprises the reaction of a dihydric phenol with a carbonyl halide (the carbonate precursor).

Although the reaction conditions of the preparative processes may vary, several of the preferred processes typically involve dissolving or dispersing the diphenol reactants in aqueous caustic, adding the resulting mixture to a suitable water immiscible solvent medium and contacting the reactants with the carbonate precursor, such as phosgene, the presence of a suitable catalyst and under controlled pH conditions. The most commonly used water immiscible solvents include methylene chloride, 1,2-dichloroethane, chlorobenzene, toluene, and the like.

The catalyst employed accelerates the rate of polymerization of the dihydric phenol reactant with the carbonate precursor. Representative catalysts include but are not limited to tertiary amines such as triethylamine, quaternary phosphonium compounds, quaternary ammonium compounds, and the like. The preferred process for preparing polycarbonate resins of the invention comprises a phosgenation reaction.

The dihydric phenols employed are known, and the reactive groups are the two phenolic hydroxyl groups. Some of the dihydric phenols are represented by the general formula:

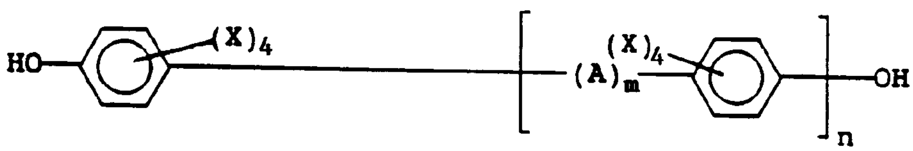

wherein A is a divalent hydrocarbon radical containing from 1 to about 15 carbon atoms; a substituted divalent hydrocarbon radical containing from 1 to about 15 carbon atoms and substituent groups such as halogen;

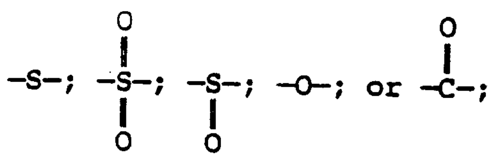

wherein each X is independently selected from the group consisting of hydrogen, halogen, and a monovalent hydrocarbon radical such as an alkyl group of from 1 to about 8 carbon atoms, an aryl group of from 6-18 carbon atoms, an aralkyl group of from 7 to about 14 carbon atoms, an alkaryl group of from 7 to about 14 carbon atoms, an alkoxy group of from 1 to about 8 carbon atoms, or an aryloxy group of from 6 to 18 carbon atoms; and wherein m is zero or 1 and n is an integer of from 0 to 5.

Typical of some of the dihydric phenols that can be employed are bisphenols such as (4-hydroxy-phenyl)methane, 2,2-bis(4-hydroxyphenyl)propane (also known as bisphenol-A), 2,2-bis(4-hydroxy-3,5-dibromophenyl)propane, 1,1-bis(4-hydroxyphenyl)-3,3,5-trimethyl cyclohexane, dihydric phenol ethers such as bis(4-hydroxyphenyl) ether, bis(3,5-dichloro-4-hydroxyphenyl) ether, dihydroxydiphenyls such as p,p'-dihydroxydiphenyl, 3,3'-dichloro-4,4'-dihydroxydiphenyl; dihydroxyaryl sulfones such as bis(4-hydroxyphenyl) sulfone, bis (3,5-dimethyl-4-hydroxyphenyl) sulfone, dihydroxybenzenes such as resorcinol, hydroquinone, halo- and alkyl-substituted dihydroxybenzenes such as 1,4-dihydroxy-2,5-dichlorobenzene, 1,4-dihydroxy-3-methylbenzene; and dihydroxydiphenyl sulfides and sulfoxides such as bis(4-hydroxyphenyl) sulfide, bis(4-hydroxyphenyl) sulfoxide and bis(3,5-dibromo-4-hydroxyphenyl) sulfoxide. In certain instances, polycarbonates principally derived from bisphenol A are preferred. A variety of additional dihydric phenols are available and are disclosed in U.S. Pat. Nos. 2,999,835 and 3,028,365 both of which are incorporated herein by reference. It is, of course, possible to employ two or more different dihydric phenols or a combination of a dihydric phenol with glycol.

The carbonate precursor can be either a carbonyl halide, a diarylcarbonate or a bishaloformate. The carbonyl halides include carbonyl bromide, carbonyl chloride, and mixtures thereof. The bishaloformates include the bishaloformates of dihydric phenols such as bischloroformates of 2,2-bis(4-hydroxyphenyl)propane, 2,2-bis(4-hydroxy-3,5-dichlorophenyl)propane, hydroquinone, and the like or bishaloformates of glycols such as bishaloformates of ethylene glycol, and the like. While all of the above carbonate precursors are useful, carbonyl chloride, also known as phosgene, is preferred.

Also included within the scope of the present invention are the high molecular weight thermoplastic randomly branched polycarbonates. These randomly branched polycarbonates are prepared by coreacting a polyfunctional organic compound with the aforedescribed dihydric phenols and carbonate precursor. The polyfunctional organic compounds useful in making the branched polycarbonates are set forth in U.S. Pat. Nos.

3,635,895 and 4,001,184 which are incorporated herein by reference.

The term "carbonate polymers" as used herein is inclusive of copolyestercarbonates, i.e., resins which contain, in addition to recurring polycarbonate chain units of the formula:

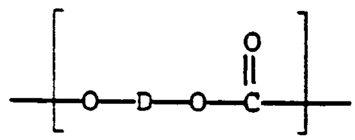

wherein D is a divalent aromatic radical of the dihydric phenol employed in the polymerization reaction, repeating or recurring carboxylate units, for example of the formula:

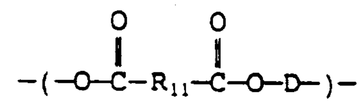

wherein D is as defined above and $R_{11}$ is as defined below.

The copolyester-polycarbonate resins are also prepared by interfacial polymerization techniques, well known to those skilled in the art; see for example the U.S. Pat. Nos. 3,169,121 and 4,487,896.

In general the copolyester-polycarbonate resins are prepared as described above for the preparation of polycarbonate homopolymers, but by the added presence of a dicarboxylic acid (ester precursor) or derivative.

In general, any dicarboxylic acid conventionally used in the preparation of linear polyesters may be utilized in the preparation of the copolyester-carbonate resins of the instant invention. Generally, the dicarboxylic acids which may be utilized include the aliphatic dicarboxylic acids, the aromatic dicarboxylic acids, and the aliphatic-aromatic dicarboxylic acids. These acids are well known and are disclosed for example in U.S. Pat. No. 3,169,121 which is hereby incorporated herein by reference. Representative of such aromatic dicarboxylic acids are those represented by the general formula:

$$HOOC-R_{11}-COOH$$

wherein $R_{11}$ represents an aromatic radical such as phenylene, naphthylene, biphenylene, substituted phenylene and the like; a divalent aliphatic-aromatic hydrocarbon radical such as an aralkyl or alkaryl radical; or two or more aromatic groups connected through non-aromatic linkages of the formula:

$$-E-$$

wherein E is a divalent alkylene or alkylidene group. E may also consist of two or more alkylene or alkylidene groups, connected by a non-alkylene or alkylidene group, connected by a non-alkylene or non-alkylidene group, such as an aromatic linkage, an ether linkage, a carbonyl linkage, or by a sulfur-containing linkage such as sulfone and the like. In addition, E may be a cycloaliphatic group of five to seven carbon atoms, inclusive, (e.g., cyclopentyl, cyclohexyl), or a cycloalkylidene of five to seven carbon atoms, inclusive, such as cyclohexylidene. Thus, in the preferred aromatic difunctional carboxylic acids, $R_{11}$ is an aromatic radical such as phenylene, or substituted phenylene.

Particularly useful aromatic dicarboxylic acids are those represented by the general formula:

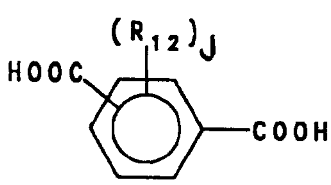

wherein j is a positive whole integer having a value of from 0 to 4 inclusive; and each $R_{12}$ is independently selected from the group consisting of alkyl radicals, preferably lower alkyl radicals (containing from 1 to about 6 carbon atoms).

Mixtures of these dicarboxylic acids may be employed. Therefore, where the term dicarboxylic acid is used herein it is to be understood that this term includes mixtures of two or more different dicarboxylic acids.

Most preferred as aromatic dicarboxylic acids are isophthalic acid, terephthalic acids, and mixtures thereof. A particularly useful difunctional carboxylic acid comprises a mixture of isophthalic acid and terephthalic acid

wherein the weight ratio of terephthalic acid to isophthalic acid is in the range of from about 10:1 to about 0.2:9.8.

Rather than utilizing the dicarboxylic acid per se, it is possible, and sometimes even preferred, to employ the reactive derivatives of the acid. Illustrative of these reactive derivatives are the acid halides. The preferred acid halides are the acid dichlorides. Thus, it is possible to employ isophthaloyl dichloride, terephthaloyl dichloride, and mixtures thereof.

The proportions of reactants employed to prepare the copolyester-carbonate resins will vary in accordance with the proposed use of the product resin. Those skilled in the art are aware of useful proportions, as described in the U.S. patents referred to above. In general, the amount of the ester bonds may be from about 5 to about 90 mole percent, relative to the carbonate bonds. For example, 5 moles of bisphenol A reacting completely with 4 moles of isophthaloyl dichloride and 1 mole of phosgene would give a copolyester-carbonate of 80 mole percent ester bonds.

The preferred polycarbonates for use in the present invention are those derived from bisphenol A and phosgene and having an intrinsic viscosity of about 0.3 to about 1.5 deciliters per gram in methylene chloride at 25°.

The gloss-reducing glycidyl methacrylate polymer additive employed according to this invention can be a homopolymer of glycidyl (meth)acrylate or a copolymer of glycidyl (meth)acrylate and at least one comonomer selected from the group consisting of styrene, acrylonitrile, and alkyl (meth)acrylates. A number of copolymers of glycidyl methacrylate are available commercially under the trade name Blemmer® Resins, from Nippon Oil & Fats Co. Ltd. and Marubeni Corp. Ltd. (Japan). Variants of these resins where the styrene is substituted with alkyl or halogen are also suitable for use in the invention.

Suitable gloss reducing additives are polymers having the following general structure:

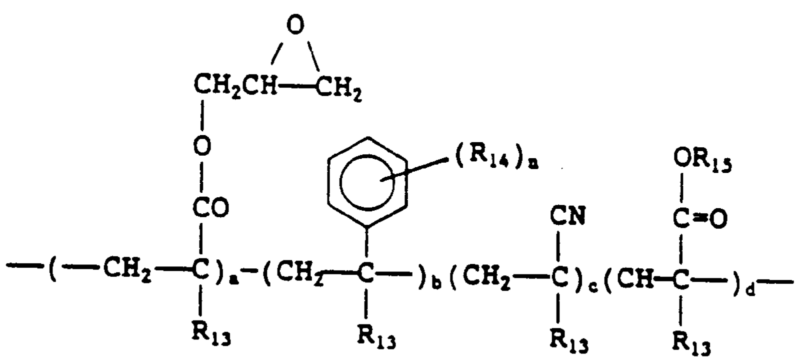

where

$R_{13}$ = alkyl (preferably methyl) or hydrogen;

$R_{14}$ = alkyl, hydrogen, or halogen (especially Br) and n = 0-5;

$R_{15}$ = alkyl ($\leqq$C18), aryl, alkylaryl, or hydrogen;

a = 1-100% (preferably 1-50%), b = 0-99% (preferably 1-99%);

c=0-50%, d=0-50%; and

a + b + c + d = 100%

Preferred glycidyl methacrylate polymers are copolymers with at least one of the comonomers enumerated above, and most preferably with styrene.

The gloss-reducing copolymers illustrated above can be prepared by various and well known techniques for the polymerization of vinyl monomers, such as by bulk and emulsion polymerization.

A gloss reducing effective amount of the glycidyl methacrylate polymer is generally found to be in the range of about 0.05 to about 10%, preferably about 0.1% to about 5%, all by weight calculated relative to the weight of the thermoplastic resin(s) employed. Lower amounts of glycidyl methacrylate polymer can give insufficient gloss reduction, while greater amounts are excessively costly and may adversely affect physical properties of the blend or moldings made therefrom.

The blends of the invention may be further modified by the addition of other types of conventional additives known in the art of plastics compounding. Such additives can include fillers (such as clay or talc), reinforcing agents (such as glass fibers), impact modifiers, other resins, plasticizers, flow promoters and other processing aids, stabilizers, colorants, mold release agents, and the like.

The compositions of the invention are prepared by any of the blending operations known for the blending of thermoplastics. Blending in a kneading machine such as a Banbury mixer or an extruder is suitable. The sequence of addition is not critical but all main components, i.e., polyester resin, glycidyl methacrylate polymer

and any other thermoplastic resin employed, should be thoroughly blended together.

The invention will be better understood with reference to the following examples, which are presented for purposes of illustration rather than for limitation, and which set forth the best mode contemplated for carrying out the invention.

Examples of the invention are illustrated in Examples 1-11. Comparison blends were prepared according to Examples A-J.

Samples were prepared by dry blending all ingredients and mixing on a twin screw extruder, at a temperature in the range of 240-280°C and at 150-300 rpm. The amounts indicated in the tables below are in parts by weight. Pelletized samples were dried at 125°C prior to injection molding. 60° Gloss was measured for these blends as per ASTM 523 on injection molded parts.

**Table I**
Example No.

| Composition | A | 1 | B | 2 | C | 3 | D |
|---|---|---|---|---|---|---|---|
| PBT[1] | 100 | 100 | 85 | 85 | 60 | 60 | -- |
| PC[2] | -- | -- | -- | -- | 30 | 30 | 85 |
| MBS Rubber[3] | -- | -- | 15 | 15 | 10 | 10 | 15 |
| GMA Copolymer CP20SA[4] | -- | 1.5 | -- | 1.5 | -- | 1.5 | 1.5 |
| 60° Gloss | >90 | 26 | >90 | 22 | >90 | 69 | 96 |

Table II
Example No.

| Composition | E | 4 | F | 5 |
|---|---|---|---|---|
| PBT[1] | 45 | 45 | 44 | 44 |
| PEI-PE-10[5] | 55 | 54 | 41 | 40 |
| MBS Rubber[3] | -- | -- | 15 | 15 |
| GMA Copolymer CP15[6] | -- | 1.0 | -- | 1.0 |
| 60° Gloss | 98 | 31 | 88 | 11 |

Table III

Example No.

| Composition | G | 6 | H | 7 |
|---|---|---|---|---|
| PBT[1] | 42 | 42 | 41 | 41 |
| PE-PE-20[7] | 58 | 57 | 44 | 43 |
| MBS Rubber[3] | -- | -- | 15 | 15 |
| GMA Copolymer CP15[6] | -- | 1.0 | -- | 1.0 |
| 60° Gloss | 73 | 39 | 98 | 33 |

1 PBT = VALOX®315 polyester from General Electric Plastics

2 PC = LEXAN®145 polycarbonate from General Electric Plastics

3 MBS = EL-3691 core shell polymethylmethacrylate-polybutadiene styrene rubber from Rohm & Haas

4 GMA Copolymer CP20SA is a copolymer of 20% glycidyl methacrylate/styrene/acrylonitrile, the copolymer having a weight average molecular weight of about 8,100

5 PEI-PE = LOMOD® J10 copolyesterimide polyether from General Electric

6 GMA Copolymer CP15 is a copolymer of 15% glycidyl methacrylate/methyl methacrylate/styrene/ alkylacrylate

7 PE-PE = LOMOD® B20 copolyester polyether from General Electric Company

Table IV
Example No.

| Composition | I | 8 | 9 | J | 10 | 11 |
|---|---|---|---|---|---|---|
| Hytrel®4056 copolymer[8] | 100 | 99.5 | 98.5 | 100 | -- | -- |
| Co-PEI[9] | -- | -- | -- | -- | 99.5 | 98.5 |
| GMA Copolymer CP30[10] | -- | 0.5 | 1.5 | -- | 0.5 | 1.5 |
| 60° Gloss | 91 | 88 | 67 | 95 | 70 | 22 |

[8] Hytrel® 4056 is a copolytetramethylene glycol polybutylene iso/terephthalate ester manufactured by Du Pont.

[9] Co-PEI is a copolytetramethylene glycol-imide capped polypropylene glycol polybutylene terephthalate. Total polyether content is about 35% by weight of the copolymer and the ratio of polytetramethylene glycol to capped polypropylene glycol is about 9:1.

[10] GMA Copolymer CP30 is a copolymer of 30% glycidyl methacrylate/methylmethacrylate/styrene/alkyl acrylate having a weight average molecular weight of about 9000.

The above results show that the glycidyl methacrylate copolymers effected gloss reduction of the polyester resin and polyester resin blends tested. Those copolymers even showed reduced gloss over MBS/ polycarbonate compositions similar to the ASA/polycarbonate compositions taught in U.S. Patent 4,885,335.

## Claims

1. A low-gloss thermoplastic composition comprising:
   (a) a thermoplastic polyester, copolyether polyester, or blend thereof; and
   (b) an effective gloss-reducing amount of a glycidyl (meth)acrylate polymer.

2. A low-gloss thermoplastic composition as defined in claim 1 wherein the glycidyl methacrylate polymer is a copolymer of glycidyl methacrylate with a comonomer selected from the group consisting of styrene, acrylonitrile, and esters of (meth)acrylic acids.

3. The thermoplastic composition as defined in claim 1 wherein said glycidyl (meth)acrylate polymer is a copolymer of glycidyl methacrylate and styrene.

4. The thermoplastic composition as defined in claim 1 wherein said glycidyl (meth)acrylate polymer is a copolymer with styrene and an alkyl (meth)acrylate.

5. A low gloss thermoplastic composition as defined in claim 1 wherein said glycidyl (meth)acrylate polymer is a copolymer of about 20 mole % glycidyl methacrylate with styrene and acrylonitrile.

6. A low-gloss thermoplastic composition as defined in claim 1 wherein said glycidyl (meth)acrylate polymer is a copolymer of about 15 mole % glycidyl methacrylate with methyl methacrylate, styrene, and an alkyl acrylate.

7. A low-gloss thermoplastic composition as defined in claim 1 wherein said glycidyl (meth)acrylate polymer is a copolymer of about 30 mole % glycidyl methacrylate with methyl methacrylate, styrene, and an alkyl acrylate.

8. A low-gloss thermoplastic composition as defined in claim 1, wherein the thermoplastic composition comprises a polyalkylene terephthalate.

9. A low-gloss thermoplastic composition as defined in claim 8 wherein the polyalkylene terephthalate is polybutylene terephthalate, polyethylene terephthalate, or a blend of polybutylene terephthalate and polyethylene terephthalate.

10. A low-gloss thermoplastic composition as defined in claim 1, wherein the thermoplastic composition comprises a copolyether polyester polymer.

11. A low-gloss thermoplastic composition as defined in claim 10, wherein the copolyether polyester comprises a polyalkylene terephthalate polyether.

12. A low-gloss thermoplastic composition as defined in claim 10, wherein the copolyether polyester comprises a polybutylene terephthalate polyether.

13. A low-gloss thermoplastic composition as defined in claim 10, wherein the copolyether polyester polymer comprises a copolyetherimide polyester polymer.

14. A low-gloss thermoplastic composition as defined in claim 10, wherein the copolyether polyester polymer is substantially derived from poly(tetramethylene ether)glycol,

15. A low-gloss thermoplastic composition as defined in claim 10, wherein the copolyether polyester polymer is substantially derived from poly(propylene ether)glycol.

16. A low-gloss thermoplastic composition as defined in claim 10 wherein the copolyether polyester polymer comprises a polymer derived from poly(tetramethylene ether)glycol and a polymer derived from poly(propylene ether)glycol.

17. A low-gloss thermoplastic composition as defined in claim 13 wherein the copolyetherimide polyester is derived from a poly(alkylene ether)glycol imide-capped poly(propylene)glycol ester.

18. A low-gloss thermoplastic composition as defined in claim 1 further comprising a rubber-modified vinyl polymer.

19. A low-gloss thermoplastic composition as defined in claim 18 wherein the rubber-modified vinyl polymer is a methacrylate-butadiene styrene copolymer.

20. A low-gloss thermoplastic composition as defined in claim 8 wherein the thermoplastic composition comprises a blend of polyester and a copolyether polyester.

21. A low-gloss thermoplastic composition as defined in claim 20 wherein the copolyether polyester is a polyetherimide polyester.

22. A low-gloss thermoplastic composition as defined in claim 20 wherein the copolyether polyester is a derivative of polybutylene terephthalate.

23. A low-gloss thermoplastic composition as defined in claim 1 further comprising a polycarbonate.

24. A low-gloss thermoplastic composition as defined in claim 23 wherein the polycarbonate is principally derived from bisphenol A.

25. A low-gloss thermoplastic composition as defined in claim 23 further comprising a polymethylmethacrylate-polybutadiene styrene or a high rubber graft acrylonitrile butadiene styrene copolymer.